# EUROPÄISCHE PATENTSCHRIFT

(11) **EP 0 210 401 B1**
(45) Veröffentlichungstag und Bekanntmachung des Hinweises auf die Patenterteilung: **27.07.1994**
(21) Anmeldenummer: 86108233.7
(22) Anmeldetag: 16.06.1986
(51) Int. Cl.: C08G 77/42, C08G 81/02

(54) **Kautschukpolymere mit blockartiger Struktur**
Rubber block copolymers
Copolymères-bloc caoutchouteux

(30) Priorität: 29.06.1985 DE 3523311
(43) Veröffentlichungstag der Anmeldung: 04.02.1987
(73) Patentinhaber: BAYER AG, 51368 Leverkusen (DE)
(72) Erfinder: Eichenauer, Herbert, Dr., D-4047 Dormagen (DE); Lindner, Christian, Dr., D-5000 Köln 60 (DE); Ott, Karl-Heinz, Dr., D-5090 Leverkusen (DE); Höcker, Hartwig, Prof. Dr., D-8581 Eckersdorf (DE)

(56) Entgegenhaltungen:
- EP-A- 0 031 887
- DE-A- 3 441 239
- FR-A- 2 318 186
- US-A- 3 928 490
- WPI, FILE SUPPLIER, AN 74-10318V, Derwent Publications Ltd, London, GB; & JP-A-74 0010954
- PATENT ABSTRACTS OF JAPAN, Band 5, Nr. 144 (C-71)[816], 11. September 1981;& JP-A-56 76 440

## Beschreibung

Die Erfindung betrifft neue Blockcopolymere aus wiederkehrenden Struktureinheiten aus der Reihe der Polysiloxane und wiederkehrenden Struktureinheiten aus der Reihe der Homo- oder Copolymeren konjugierter Diene mit besonders guten Kautschukeigenschaften, insbesondere bei tiefen Temperaturen.

Verschiedenartige Blockcopolymere sind bekannt, z.B. Styrol-Butadien-Blockcopolymere, Blockcopolymere aus aliphatischen Polyestern oder Polyethern und Polyestern von aromatischen Dicarbonsäuren oder Blockcopolymere auf der Basis aromatischer Polycarbonate.

In allen diesen Fällen weist wenigstens ein Polymerblock ein Erweichungsverhalten auf, das als thermoplastisch anzusprechen ist (seine Glasübergangstemperatur liegt weit oberhalb der Raumtemperatur). Diese Blockcopolymere zeichnen sich aufgrund der Kombination von Thermoplast- und Kautschukeigenschaften in einem Molekül durch besondere Eigenschaften aus.

Wenig bekannt sind dagegen Blockcoplymere, bei denen jeder Polymerblock für sich einen Kautschuk darstellt.

Die US-PS 3 928 490 beschreibt die Umsetzung von Polybutadienyllithium (Molekulargewicht 1000 bis 20 000) mit einem Polysiloxan mit einem Molekulargewicht von mindestens 100 000. Das Derwent-Referat 74/10318 der japanischen Patentanmeldung 74/001954 betrifft die Herstellung von Harzen durch Kondensation eines Siliconharzes, dessen Formel als 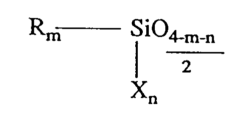
(R = Alkyl, Vinyl, Aryl; X = Halogen, Alkoxy, Acyloxy, Silanol; m = 1 bis 2; n =0 bis 3) angegeben wird mit einem Polybutadienglykol vom Molekulargewicht 500 bis 10 000.

Es wurde gefunden, daß blockartig aufgebaute Polymere auf Basis von Segmenten aus Polysiloxanen und Segmenten, die sich von Homo-oder Copolymeren auf der Basis konjugierter Diene ableiten, besonders interessante Kautschukeigenschaften besitzen, z.B. leichte Vulkanisierbarkeit und gute Füllbarkeit mit bekannten Verstärkerhilfsstoffen wie Ruß oder Titandioxid, bessere Beständigkeit gegenüber Lösungsmitteln und Ölen, gute Verarbeitbarkeit auf Walzen und Knetern und gute elastische Eigenschaften.

Gegenstand der Erfindung sind Kautschukpolymere mit blockartiger Struktur aus wiederkehrenden Struktureinheiten (I)

⁅A - B⁆ (I)

und gegebenenfalls wiederkehrenden Struktureinheiten (II)

⁅A' - C⁆ (II)

wobei die Kautschukpolymeren mittlere Molekulargewichte (M̅_{w}) von 10.000 bis 1.000.000, vorzugsweise von 10.000 bis 50.000 und von 100.000 bis 500.000 aufweisen, die dadurch gekennzeichnet sind, daß
- A und A' gleiche oder verschiedene bifunktionelle Polysiloxansegmente der Formel (III) 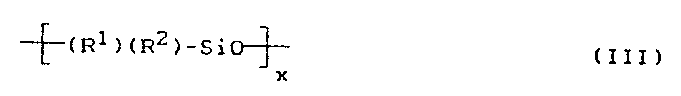 darstellen mit R¹ und R² = Aryl und/oder Alkyl, wobei x eine solche Zahl darstellt, daß (III) mittlere Molekulargewichte (M̅_{w}) von 500 - 20.000, insbesondere 1000 - 10.000 besitzt.
- B bifunktionelle Homo- und/oder Copolymersegmente auf der Basis von Monomeren aus der Reihe der konjugierten Diene darstellen, wobei diese Segmente mittlere Molekulargewichte (M̅_{w}) von 800 - 12.000 aufweisen,
- C bifunktionelle aliphatische Polyester- und/oder aliphatische Polyethersegmente mit mittleren Molekulargewichten (M̅_{w}) von 800 - 12.000 darstellen.
- und die Glasübergangstemperaturen der Polymerblöcke A, A', B und C unterhalb von 0°C, bevorzugt unterhalb von -20°C liegen.

Die Segmente B der erfindungsgemäßen Polymeren sind bevorzugt ausgewählt aus der Reihe der Butadienhomopolymerisate oder der Butadiencopolymerisate. Besonderes bevorzugt sind Butadiencopolymerisate mit 5 bis 35 Gew.-%, bezogen auf B, copolymerisierten Monomeren wie Acrylnitril, Methacrylnitril, Styrol, Halogenstyrol, p-Methylstyrol, Methacrylsäureester mit 1-12 C-Atomen in der Alkoholkomponente und Acrylsäureester mit 1 - 12 C-Atomen in der Alkoholkomponente; bevorzugte Comonomere des Butadiens sind Acrylnitril, Styrol, Methylmethacrylat, n-Butylacrylat, Ethylacrylat oder Ethylhexylacrylat.

Als Segmente C sind bevorzugt Polyalkylenoxid-Segmente mit C₁-C₆-Alkyleneinheiten oder bifunktionelle Polyesterreste aus der Reihe der Polykondensate aus aliphatischen C₂-C₁₂-Dicarbonsäuren und aliphatischen C₂-C₁₈-Alkylendiolen.

Ein weiterer Gegenstand der Erfindung ist ein Verfahren zur Herstellung der erfindungsgemäßen Polymeren, das dadurch gekennzeichnet ist, daß man ein Homo- und/oder Copolymerisat konjugierter Diene mit terminalen Hydroxylgruppen der Formel (IV)

HO-B-OH (IV)

gegebenenfalls ein aliphatisches Polyester- und/oder Polyetherdiol der Formel (V)

HO-C-OH (V)

und ein Polysiloxan der Formel (VI) 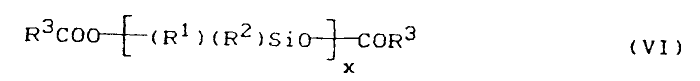
mit R¹ und R² unabhängig voneinander = Aryl (insbesondere Phenyl) oder Alkyl (insbesondere Methyl), R³ = C₁-C₁₈-Alkyl; x = ganze Zahl, gegebenenfalls unter Katalyse oder mittels säurebindender Mittel, unter Abspaltung der Säure R³COOH polykondensiert, wobei das Polymerisat (IV) ein durchschnittliches Molekulargewicht (M̅_{w}) von 800 bis 12.000, das Diol (V) ein durchschnittliches Molekulargewicht (M̅_{w}) von 800 bis 12.000 und das Polysiloxan (VI) ein durchschnittliches Molekulargewicht (M̅_{w}) von 500 bis 20.000 aufweist.

Die in den Blockcopolymeren enthaltenen Polysiloxane sind Polydialkyl-, Polydiaryl- oder Polyarylalkylsiloxane, insbesondere Polydimethylsiloxan- oder Polymethylphenylsiloxan-Reste. Sie besitzen Blockmolekulargewichte von 500 bis 20.000, insbesondere 1.000 bis 10.000; sie sind weitgehend linear.

Die die Blöcke B bildenden Dienpolymersegmente leiten sich von Polymeren konjugierter Diene (insbesondere Butadien, Isopren) sowie von deren Copolymeren mit copolymerisierbaren olefinisch ungesättigten Verbindungen, insbesondere Vinylmonomeren, ab.

Die die Blöcke C bildenden Polyestersegmente leiten sich von aliphatischen gesättigten oder ungesättigten Dicarbonsäuren ab, z.B. von Oxalsäure, Bernsteinsäure, Adipinsäure, Azelainsäure, Sebacinsäure, Kohlensäure, Maleinsäure, Fumarsäure, Butadiendicarbonsäure. Als Diolkomponenten der Polyester eignen sich besonders Ethandiol, Butandiol, Hexandiol, Neopentylglykol, Alkylenetherdiole mit Molekulargewichten bis zu etwa 150 sowie ungesättigte aliphatische Diole wie Butendiole und höhere ungesättigte Dicarbonsäuren mit mehr als 10 C-Atomen im Molekül. Als Blöcke C eignen sich auch Polyetherdiolreste aus der Reihe der Polyalkylenether, z.B. Polyformaldehydreste, Polytetrahydrofuranreste bzw. Polybutylenoxidreste, Polyethylenoxidreste sowie deren Copolymere.

Dabei können als Komponente C nicht nur Polyesterblöcke oder nur Polyetherblöcke vorliegen. Es kann auch ein Teil der Blöcke C Polyester und der andere Teil Polyether sein, schließlich können auch Blöcke C vorliegen, die nebeneinander Ether- und Esterfunktionen enthalten. Setzt man zur Herstellung der Blockcopolymeren neben linearen auch verzweigte Polyester- oder Polyetherkomponenten ein, so werden Blockcopolymere erhalten, die verzweigte aber unvernetzte Strukturen aufweisen.

Ebenfalls geeignet als Blöcke C sind Polyether- oder Polyesterblöcke, die selbst eine Sequenz- oder auch Blockstruktur aufweisen, z.B. Polyethylenoxid-Polypropylenoxid-Blockcopolymer- sowie Polyester-Polyether-Blockcopolymer-Bausteine.

In den erfindungsgemäßen Blockcopolymeren können Dienpolymerisatblöcke nicht nur mit Polysiloxanblöcken kombiniert vorliegen, sondern auch in zusätzlicher Kombination mit aliphatischen Polyester- und/oder Polyethersegmenten. Besonders bevorzugt sind Polymere im Sinne der Erfindung, die bis zu 20 Gew.-%, insbesondere bis zu 10 Gew.-% (bezogen auf das Gesamtgewicht an Kautschukpolymer) eines Polyesters, insbesondere auf Basis Adipinsäure, oder eines Polyethers mit bis zu 4 C-Atomen in der Alkylengruppe einpolymerisiert enthalten. In den letztgenannten Fällen handelt es sich dann um Multiblockcopolymere mit mindestens drei chemisch unterschiedlich aufgebauten Polymersequenzen. Für besondere anwendungstechnische Anforderungen sind sogar Multiblockcopolymere im Sinne der Erfindung aus mindestens vier chemisch unterschiedlichen Blöcken vorteilhaft. Solche Produkte sind dann besonders gut für Kautschukanwendungen geeignet, wenn sich die polysiloxanfremden Polymersequenzen in ihrem Kristallisationsverhalten unterscheiden, wie es z.B. bei Kombinationen chemisch unterschiedlich aufgebauter aliphatischer Polyester sein kann.

Die erfindungsgemäßen Blockcopolymere können hergestellt werden, indem man bisacylierte Polysiloxane der Formel (VI) mit Dienhomo- und/oder -copolymerisaten mit terminalen Hydroxylgruppen der Formel (IV) und gegebenenfalls mit Polyether- und/oder Polyesterdiolen der Formel (V) polykondensiert. Normalerweise werden die Ausgangskomponenten der Formeln (VI) und (IV) bzw. (VI) und (IV) + (V) in äquimolaren Mengen eingesetzt, es kann aber vorteilhaft sein, die eine oder andere Komponente in geringem Überschuß einzusetzen. Man kann dann das Endmolekulargewicht besser steuern und die Art der Endgruppen bestimmen. Um das Molekulargewicht schon bei der Synthese zu bestimmen kann man Molekulargewichtsregler verwenden, z.B. monofunktionelle Verbindungen wie Monoalkohole, monoacylierte Polysiloxane, Anhydride, Ester und Säurechloride.

Die Synthese der Blockcopolymeren kann bei Temperaturen von 40 bis etwa 200°C durchgeführt werden, insbesondere bei 80 bis 150°C. Dabei kann ohne oder mit Lösungsmittel gearbeitet werden, z.B. mit aromatischen Kohlenwasserstoffen, Paraffinen, chlorierten Kohlenwasserstoffen, flüssigen Amiden, Estern, Ketonen und Ethern.

Eine bevorzugte Ausführungsform des Verfahrens startet ohne Lösungsmittel und fügt Lösungsmittel am Ende der Polykondensation zu.

Man benutzt bevorzugt Katalysatoren und/oder säurebindende Mittel, z.B. organische oder anorganische Basen wie Salze (Carbonate von Alkali- oder Erdalkalimetallen) oder lösliche organische Basen, wie tertiäre Amine, auch Phasentransferkatalysatoren, Phosphine, Lewis-Basen sind geeignet. Unter Umständen ist bei bestimmten Reaktionstemperaturen auch das Arbeiten in Gegenwart katalytischer Mengen starker Säuren vorteilhaft, insbesondere dann, wenn man die Polykondensation unter Abdestillation der gebildeten Säuren (aus dem Ausgangsprodukt VI) durchführt.

Die Synthese läßt sich diskontinuierlich oder kontinuierlich durchführen, auch in Knetaggregaten oder Schneckenaggregaten.

Vorteilhaft ist es ebenfalls, die gesamte Menge der Ausgangssubstanz (VI) oder (IV) bzw. (IV) und (V) im Reaktor vorzulegen und - je nach Fortschritt der Reaktion - die restliche Menge der unterschiedlichen Ausgangskomponenten (IV) bzw. (IV) und (V) oder (VI) zuzudosieren.

Im Anschluß an die Synthese lassen sich die Kautschuke, gegebenenfalls unter Verdampfen der Hilfslösemittel oder Abfiltration der aus der abgespaltenen Säure gebildeten Produkte, isolieren, und durch übliche Antioxidantien oder Lichtschutzmittel stabilisieren.

Die erfindungsgemäßen Kautschuke sind vulkanisierbar, z.B. mit radikalischen Initiatoren oder Schwefel in Kombination mit den bekannten Vulkanisationshilfsmitteln. Sie sind mit besonders hohen Mengen anorganischer Füllstoffe verstärkbar bzw. verstreckbar. Im unvulkanisierten Zustand eignen sich die erfindungsgemäßen Polymeren als Klebrigmacher oder Klebstoffrohprodukte, insbesondere dann, wenn sie ein mittleres Molekulargewicht aufweisen. Im vulkanisierten Zustand eignen sich die erfindungsgemäßen Kautschuke zur Herstellung von Beschichtungen, Dichtungsmassen, Isoliermassen oder Dämpfungsmaterialien, besonders auf den Sektoren, wo hohe Beständigkeit gegenüber aggressiven Medien und hohe Tieftemperaturelastizität gefordert werden.

### Beispiele

### Beispiel 1

1000 Gewichtsteile eines Copolymerisats aus Butadien und Acrylnitril mit terminalen Hydroxylgruppen (Acrylnitrilgehalt = 15 Gew.-%, aus der OH-Zahl bestimmtes Molekulargewicht = 5000), 800 Gewichtsteile eines α,ω-bis-acetylierten Polydimethylsiloxans mit einem Molekulargewicht von 4000 (bestimmt durch Acetylbestimmung), 100 Gew.-Teile Na₂CO₃, 3000 Gew.-Teile Toluol und 8 Gewichtsteile 2,6-Di-tert.- butyl-4-methylphenol werden 4 Stunden bei 110°C-120°C umgesetzt. Danach steigert man die Temperatur mit zunehmender Viskosität der Lösung auf 130°C-140°C. Nach einer Gesamtreaktionszeit von 8 Stunden kühlt man ab, filtriert, und dampft das Lösungsmittel ab. Das resultierende Kautschukprodukt besitzt eine Grenzviskosität von 0,99 dl/g (in Tetrahydrofuran).

### Beispiel 2

Beispiel 1 wird wiederholt, wobei als Butadien/Acrylnitril-Copolymerisat mit terminalen Hydroxylgruppen ein Produkt mit einem Acrylnitrilgehalt von 10 Gew.-% eingesetzt wird. Das resultierende Produkt besitzt eine Grenzviskosität von 1,04 dl/g (in Tetrahydrofuran).

### Beispiel 3

1000 Gewichtsteile eines Polybutadienöls mit terminalen Hydroxylgruppen (aus der OH-Zahl bestimmtes Molekulargewicht = 2.700), 1480 Gewichtsteile eines α,ω-bis-acetylierten Polydimethylsiloxans mit einem Molekulargewicht von 4000 (bestimmt durch Acetylbestimmung), 180 Gewichtsteile Na₂CO₃, 6500 Gewichtsteile Toluol und 10 Gewichtsteile 2,6-Di-tert.-butyl-4-methylphenol werden 5 Stunden bei 110°C - 120°C umgesetzt.

Danach wird die Temperatur mit zunehmender Viskosität der Lösung auf 130°C - 140°C gesteigert. Nach einer Gesamtreaktionszeit von 10 Stunden kühlt man ab, filtriert, und dampft das Lösungsmittel ab. Der resultierende Kautschuk besitzt eine Grenzviskosität von 0,86 dl/g (in THF).

### Beispiel 4

500 Gewichtsteile des in Beispiel 1 eingesetzten Butadien/Acrylnitril-Copolymerisats mit terminalen Hydroxylgruppen, 200 Gewichtsteile eines Polyesterdiols aus Adipinsäure und Neopentylglykol/Hexandiol im Gewichtsverhältnis von 35:65 und einem Gesamtmolekulargewicht von 2000 (bestimmt aus der OH-Zahl), 800 Gewichtsteile des in Beispiel 1 eingesetzten α,-bis-acetylierten Polydimethylsiloxans, 100 Gewichtsteile Na₂CO₃, 3000 Gewichtsteile Toluol und 8 Gewichtsteile 2,6-Di-tert.-butyl-4-methylphenol werden 12 Stunden lang bei 110°C - 120°C umgesetzt. Danach wird abgekühlt, filtriert und das Lösungsmittel abgedampft. Das resultierende Kautschukprodukt besitzt eine Grenzviskosität von 1,11 dl/g (in Tetrahydrofuran).

### Beispiel 5

Beispiel 4 wird wiederholt, wobei statt des Polyesterdiols ein Polytetrahydrofurandiol mit einem Molekulargewicht von 2000 (bestimmt aus der OH-Zahl) eingesetzt wird. Das Kautschukprodukt besitzt eine Grenzviskosität von 0,96 dl/g (in THF).

### Beispiel 6

100 Gewichtsteile des Kautschuks aus Beispiel 1, 20 Gewichtsteile Ruß, 1 Gewichtsteil Stearinsäure und 1,2 Gewichtsteile Schwefel werden innig vermischt. Aus der Mischung wird ein Streifen hergestellt, der vulkanisiert wird. Das resultierende Material ist unlöslich in allen Lösungsmitteln und besitzt eine gute Tieftemperaturelastizität.

## Patentansprüche

1. Kautschukpolymere mit blockartiger Struktur aus wiederkehrenden Struktureinheiten (I)
( A-B ) (I)
und gegebenenfalls wiederkehrenden Struktureinheiten (II)
( A'-C ) (II)
wobei die Kautschukpolymeren mittlere Molekulargewichte (M̅_{w}) von 10.000 bis 1.000.000 aufweisen, dadurch gekennzeichnet, daß
- A und A' bifunktionelle Polysiloxansegmente der Formel (III) 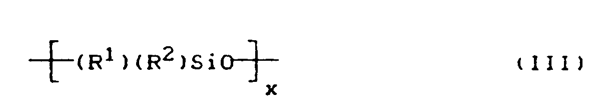 darstellen, mit R¹ und R² unabhängig voneinander = Aryl und/oder Alkyl, wobei x eine solche Zahl darstellt, daß (III) mittlere Molekulargewichte (M̅_{w}) von 500 - 20.000 besitzt und wobei A und A' identisch oder chemisch unterschiedlich aufgebaut sein können,
- B bifunktionelle Homo- und/oder Copolymersegmente auf der Basis von Monomeren aus der Reihe der konjugierten Diene darstellen, mit mittleren Molekulargewichten (M̅_{w}) von 800 - 12.000,
- C bifunktionelle aliphatische Polyester - und/oder aliphatische Polyethersegmente mit mittleren Molekulargewichten (M̅_{w}) von 800 - 12.000 darstellen
- und die Glasübergangstemperaturen der polymeren Blöcke A, A', B und C unterhalb von 0°C liegen.

2. Kautschukpolymere nach Anspruch 1, dadurch gekennzeichnet, daß das Segment B ein bifunktioneller Rest aus der Reihe der Butadienhomopolymerisate oder -copolymerisate mit bis zu 35 Gew.-% (bezogen auf B) copolymerisierten Monomeren aus der Reihe Acrylnitril, Styrol, Methylmethacrylat oder C₁-C₁₂-Alkylacrylat darstellt.

3. Verfahren zur Herstellung von Kautschukpolymeren gemäß Anspruch 1 und 2, dadurch gekennzeichnet, daß man Homo- und/oder Copolymerisate konjugierter Diene mit terminalen Hydroxylgruppen (IV)
HO-B-OH (IV)
sowie ein Polysiloxan der Formel (VI)
R³COO⁅(R¹)(R²)SiO⁆COR³ (VI)
gegebenenfalls in Kombination mit aliphatischen Polyester- und/oder Polyetherdiolen (V)
HO - C - OH (V)
unter Abspaltung der Säure R³COOH polykondensiert, wobei R¹ und R² = Alkyl und/oder Aryl, R³ = C₁-C₁₈-Alkyl und x eine ganze Zahl bedeuten und wobei die Verbindungen (IV) und (V) mittlere Molekulargewichte (M̅_{w}) von 800 -12000 und die Verbindung (VI) mittlere Molekulargewichte (M̅_{w}) von 500-20000 aufweisen.

## Claims

1. Rubber polymers having a block-like structure of recurring structural units (I):
( A-B ) (I)
and optionally recurring structural units (II):
( A'-C ) (II)
the rubber polymers having average molecular weights (M̅_{w}) of 10,000 to 1,000,000, characterized in that
- A and A', which may be identical or chemically different in structure, represent bifunctional polysiloxane segments corresponding to formula (III): 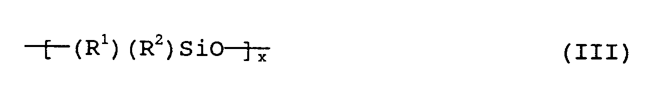 in which R¹ and R² independently of one another represent aryl and/or alkyl and x has such a value that (III) has average molecular weights (M̅_{w}) of 500 to 20,000,
- B represents bifunctional homopolymer and/or copolymer segments based on monomers from the series of conjugated dienes with average molecular weights (M̅_{w}) of 800 to 12,000,
- C represents bifunctional aliphatic polyester and/or aliphatic polyether segments with average molecular weights (M̅_{w}) of 800 to 12,000
- and the glass transition temperatures of the polymeric blocks A, A', B and C are below 0°C.

2. Rubber polymers as claimed in claim 1, characterized in that the segment B is a bifunctional unit from the series of butadiene homopolymers or copolymers with up to 35% by weight (based on B) of copolymerized monomers from the group consisting of acrylonitrile, styrene, methyl methacrylate or C₁₋₁₂ alkyl acrylate.

3. A process for the production of the rubber polymers claimed in claims 1 and 2, characterized in that homopolymers and/or copolymers of hydroxyl-terminated conjugated dienes (IV):
HO-B-OH (IV)
and a polysiloxane corresponding to formula (VI)
R³COO⁅(R¹)(R²)SiO⁆COR³ (VI)
optionally in combination with aliphatic polyester and/or polyether diols (V):
HO - C - OH (V)
are polycondensed with elimination of the acid R³COOH, R¹ and R² being alkyl and/or aryl, R³ being C₁₋₁₈ alkyl and x being an integer and the compounds (IV) and (V) having average molecular weights (M̅_{w}) of 800 to 12,000 and the compound (VI) having average molecular weights (M̅_{w}) of 500 to 20,000.

## Revendications

1. Polymères du type caoutchouc à structure séquencée, consistant en motifs de structure répétés I
(A - B) (I)
et le cas échéant en motifs de structure répétés II
(A' - C) (II)
les polymères du type caoutchouc ayant des poids moléculaires moyen M̅_{w} de 10 000 à 1 000 000 et se caractérisant en ce que :
- A et A' représentent des segments bifonctionnels de polysiloxannes de formule III 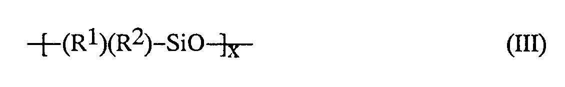 dans laquelle R¹ et R² représentent chacun, indépendamment l'un de l'autre, un groupe aryle et/ou alkyle, x est un nombre tel que le segment III ait un poids moléculaire moyen M̅_{w} de 500 à 20 000, et A et A' peuvent avoir des structures chimiques identiques ou différentes,
- B représente des segments bifonctionnels d'homo- et/ou copolymères à base de monomères de la classe des diènes conjugués, à des poids moléculaires moyens M̅_{w} de 800 à 12 000,
- C représente des segments bifonctionnels de polyesters aliphatiques et/ou de polyéthers aliphatiques de poids moléculaire moyen M̅_{w} de 800 à 12 000,
- et les températures de transition du second ordre des blocs polymères A, A', B et C sont inférieures à 0°C.

2. Polymères du type caoutchouc selon la revendication 1, caractérisés en ce que le segment B est un radical bifonctionnel de la classe des homopolymères ou copolymères du butadiène avec jusqu'à 35 % en poids (par rapport à B) de monomères copolymérisés de la classe consistant en l'acrylonitrile, le styrène, le méthacrylate de méthyle et les acrylates d'alkyle en C₁-C₁₂.

3. Procédé de préparation des polymères du type caoutchouc selon les revendications 1 et 2, caractérisé en ce que l'on soumet à polycondensation des homo- et/ou copolymères de diènes conjugués à groupes terminaux hydroxy IV
HO - B - OH (IV)
et un polysiloxanne de formule VI
R³COO⁅(R¹)(R²)SiO⁆COR³ (VI)
éventuellement en combinaison avec des polyester- et/ou polyéther-diols aliphatiques V
HO - C -OH (V)
avec scission de l'acide R³COOH,
R¹ et R² représentant des groupes alkyle et/ou aryle, R³ un groupe alkyle en C₁-C₁₈ et x un nombre entier, les composés IV et V ayant des poids moléculaires moyens M̅_{w} de 800 à 12 000 et le composé VI un poids moléculaire moyen M̅_{w} de 500 à 20 000.
